# EUROPÄISCHE PATENTSCHRIFT

(11) **EP 3 554 935 B1**
(45) Veröffentlichungstag und Bekanntmachung des Hinweises auf die Patenterteilung: **04.11.2020**
(21) Anmeldenummer: 17811505.1
(22) Anmeldetag: 24.11.2017
(51) Int. Cl.: B62M 11/14, B62M 11/18

(54) **GETRIEBE FÜR EIN FAHRRAD**
TRANSMISSION FOR A BICYCLE
BOÎTE DE VITESSES POUR BICYCLETTE

(30) Priorität: 15.12.2016 DE 102016225157
(43) Veröffentlichungstag der Anmeldung: 23.10.2019
(73) Patentinhaber: ZF Friedrichshafen AG, 88046 Friedrichshafen (DE)
(72) Erfinder: GRIESMEIER, Uwe, 88677 Markdorf (DE); KALTENBACH, Johannes, 88048 Friedrichshafen (DE); ENGEL, Valerie, 88045 Friedrichshafen (DE); NITSCH, Matthias, 89075 Ulm (DE)
(74) Vertreter: ZF Friedrichshafen AG
(86) Internationale Anmeldenummer: PCT/EP2017/080389
(87) Internationale Veröffentlichungsnummer: WO 2018/108488

(56) Entgegenhaltungen:
- DE-A1-102014 101 726
- DE-A1-102014 214 962
- US-A1- 2011 177 911

## Beschreibung

Die Erfindung betrifft ein Getriebe für ein Fahrrad, mit einer Getriebeeingangswelle, die mit einer Tretlagerkurbelwelle drehfest verbindbar ist, einem ersten Planetensatz, einem zweiten Planetensatz und einem dritten Planetensatz, die miteinander wirkverbunden sind, wobei ein Element des ersten Planetensatzes mit der Getriebeeingangswelle drehfest verbunden ist und der erste Planetensatz einen Planeten mit einer ersten Planetenstufe und einer zweiten Planetenstufe aufweist
Die Erfindung betrifft außerdem ein Tretlagergetriebe mit einem solchen Getriebe. Darüber hinaus betrifft die Erfindung ein Fahrrad mit dem Getriebe oder dem Tretlagergetriebe.

Aus dem Stand der Technik ist eine Vielzahl von Getrieben bekannt, die in Tretlagern von Fahrrädern eingesetzt werden. So ist aus der US 2011 179 11 A1, die die Merkmale des Oberbegriffes des Anspruchs 1 offenbart, ein Tretlagergetriebe bekannt, das drei hintereinander geschaltete Planetengetriebe aufweist. Die Planetengetriebe sind derart ausgebildet, dass eine Übersetzung ins Schnelle erfolgt. Bei dem Getriebe handelt es sich um ein 12-Gang-Tretlagergetriebe, das jedoch insgesamt sieben Planetenradebenen aufweist, worunter sich auch zahlreiche Stufenplaneten befinden. Somit ist der Bauaufwand für das Tretlagergetriebe hoch.

DE102014101726A1 offenbart ein Getriebe mit bis zu 142 Vorwärtsgängen mit nur zwei Stufenplanetensätze. Die Aufgabe der Erfindung besteht daher darin ein Getriebe für ein Fahrrad anzugeben, das einfach ausgebildet ist und bei dem der Bauaufwand gering ist.

Diese Aufgabe wird durch ein Getriebe der eingangs genannten Art gelöst, das dadurch gekennzeichnet ist, dass ein mit einem Verzahnungsbereich der ersten Planetenstufe in Eingriff stehendes erstes Hohlrad mittels eines ersten Schaltelements mit einem Getriebegehäuse drehfest verbindbar ist und ein mit einem Verzahnungsbereich der zweiten Planetenstufe in Eingriff stehendes zweites Hohlrad mittels eines zweiten Schaltelements mit dem Getriebegehäuse drehfest verbindbar ist.

Das erfindungsgemäße Getriebe weist den Vorteil auf, dass der Planet klein ausgebildet ist. So ist der Durchmesser bei einem Modul von 1 kleiner als 80mm. Darüber hinaus können die anderen Planetensätze im Durchmesser ebenfalls kleingehalten werden, so dass das Getriebe kompakt ausgebildet ist. Außerdem weist das Getriebe den Vorteil auf, dass es einfach aufgebaut ist, so dass der Bauaufwand für das Getriebe gering ist.

Das Getriebegehäuse kann Bestandteil des Tretlagergehäuses sein, also einstückig mit dem Tretlagergehäuse ausgeführt sein. Alternativ kann das Getriebegehäuse ein von dem Tretlagergehäuse separates Gehäuse sein, das in einen Hohlraum des Tretlagergehäuses eingebracht werden kann. Das Getriebegehäuse kann derart ausgebildet und angeordnet sein, dass es sich im Betrieb des Getriebes nicht dreht, sondern ortsfest ist.

Unter einer Welle wird nicht ausschließlich ein beispielsweise zylindrisches, drehbar gelagertes Maschinenelement zur Übertragung von Drehmomenten verstanden. Vielmehr sind hierunter auch allgemeine Verbindungselemente zu verstehen, die einzelne Bauteile miteinander verbinden, insbesondere Verbindungselemente, die mehrere Bauteile drehfest miteinander verbinden.

Die Planetenstufen weisen alle einen Verzahnungsbereich auf, der mit wenigstens einem anderen Element des Planetensatzes in Eingriff gebracht werden kann. Dabei unterscheiden sich die einzelnen Planetenstufen in ihrem Durchmesser voneinander. Der Planet wird durch einen Steg des ersten Planetensatzes getragen.

Bei dem erfindungsgemäßen Getriebe kann der erste Gang eine Übersetzung von 1 oder geringfügig über 1 aufweisen. Ab dem zweiten Gang erfolgt eine Übersetzung ins Schnelle, also weist die Übersetzung einen Wert kleiner als 1 auf. Mittels des erfindungsgemäßen Getriebes lassen sich wenigstens acht, insbesondere genau acht, Gänge realisieren. Dies ist möglich, da mit jedem der Planetensätze jeweils zwei Gänge realisierbar sind.

Das erfindungsgemäße Getriebe weist auch den Vorteil auf, dass dieses durch geringfügige Umbauten ganz besonders einfach erweitert werden kann. Insbesondere kann das Getriebe von einem 8-Gang-Getriebe auf ein enger gestuftes 12-Gang-Getriebe erweitert werden. Dies kann dadurch realisiert werden, dass dem Planet des ersten Planetensatzes eine dritte Planetenstufe hinzugefügt wird. Ein mit einem Verzahnungsbereich der dritten Planetenstufe in Eingriff stehendes drittes Hohlrad kann mittels eines dritten Schaltelements mit dem Getriebegehäuse drehfest verbindbar sein. Auf diese Weise kann das erfindungsgemäße Getriebe von einem 8-Gang-Getriebe auf ein 12-Gang-Getriebe auf ganz besonders einfache Weise erweitert werden.

Bei dem Element des ersten Planetensatzes handelt es sich um einen Steg, der den Planeten trägt. Dabei kann der Steg natürlich auch mehrere Planeten tragen. Ein Sonnenrad des ersten Planetensatzes kann mit einem Steg des zweiten Planetensatzes drehfest verbunden sein. Insbesondere kann das mit der ersten Planetenstufe in Eingriff stehende Sonnenrad des ersten Planetensatzes mit dem Steg des zweiten Planetensatzes drehfest verbunden sein.

Ein Sonnenrad des zweiten Planetensatzes kann mittels eines vierten Schaltelements mit dem Getriebegehäuse drehfest verbindbar sein. Darüber hinaus können zwei Elemente des zweiten Planetensatzes mittels eines fünften Schaltelements drehfest miteinander verbindbar sein. Dadurch kann ein Verblocken des zweiten Planetensatzes erreicht werden. Bei einem Verblocken weist der Planetensatz eine Übersetzung von 1 auf. Insbesondere kann das fünfte Schaltelement derart angeordnet sein, dass ein Hohlrad des zweiten Planetensatzes mit dem Sonnenrad des zweiten Planetensatzes drehfest verbindbar sein. Natürlich kann das fünfte Schaltelement auch anders angeordnet sein, so dass das Hohlrad des zweiten Planetensatzes mit dem Steg des zweiten Planetensatzes oder der Steg des zweiten Planetensatzes mit dem Sonnenrad des zweiten Planetensatzes drehfest miteinander verbunden werden können.

Das Hohlrad des zweiten Planetensatzes kann darüber hinaus mit einem Sonnenrad des dritten Planetensatzes drehfest verbunden sein. Ein Hohlrad des dritten Planetensatzes kann mittels eines sechsten Schaltelements mit dem Getriebegehäuse drehfest verbindbar sein.

Darüber hinaus können zwei Elemente des dritten Planetensatzes drehfest miteinander verbindbar sein. Dadurch kann ein Verblocken des dritten Planetensatzes erreicht werden. Ganz besonders vorteilhaft ist, wenn das siebte Schaltelement derart angeordnet ist, dass das Hohlrad des dritten Planetensatzes mit dem Sonnenrad des dritten Planetensatzes drehfest verbindbar ist. Natürlich ist auch eine Anordnung des siebten Schaltelements möglich, bei der das Hohlrad des dritten Planetensatzes mit dem Steg des dritten Planetensatzes oder der Steg des dritten Planetensatzes mit dem Sonnenrad des dritten Planetensatzes drehfest miteinander verbunden werden können.

Ein Element des dritten Planetensatzes kann mit einer Getriebeausgangswelle drehfest verbunden sein. Insbesondere kann der Steg des dritten Planetensatzes mit der Getriebeausgangswelle drehfest verbunden sein. Die Getriebeausgangswelle kann mit einem Zugmittelträger, wie beispielsweise einem Kettenrad oder Riemenrad drehfest verbunden sein. Das von dem Getriebe bereitgestellte Drehmoment kann über den Zugmittelträger und ein Zugmittel, wie beispielsweise eine Kette oder ein Riemen, auf ein Hinterrad des Fahrrads übertragen werden.

Im Ergebnis wird ein einfach aufgebautes Getriebe bereitgestellt, das genau drei Planetensätze aufweisen kann und mittels dem sich eine Vielzahl von Gängen realisieren lassen. Darüber hinaus kann der Planet des ersten Planetensatzes genau drei Planetenstufen aufweisen. Insbesondere weist das Getriebe den Vorteil auf, dass das sechste Schaltelement nicht stark belastet wird und ein geringes Stützmoment an dem Sonnenrad anliegt.

Der erste und/oder zweite und/oder dritte Planetensatz können als Minus-Planetensatz ausgeführt sein. Alternativ ist es vorstellbar, dass der erste und/oder zweite und/oder dritte Planetensatz als Plus-Planetensatz ausgeführt sind.

Ein Minus-Planetensatz entspricht einem Planetensatz mit einem Steg, an dem die Planetenräder drehbar gelagert sind, einem Sonnenrad und einem Hohlrad, wobei die Verzahnung zumindest eines der Planetenräder sowohl mit der Verzahnung des Sonnenrades als auch mit der Verzahnung des Hohlrades kämmt, wodurch das Hohlrad und das Sonnenrad in entgegengesetzter Drehrichtung rotieren, wenn das Sonnenrad bei feststehendem Steg rotiert. Im Gegensatz dazu unterscheidet sich ein Plus-Planetensatz von dem Minus-Planetensatz dahingehend, dass der Plus-Planetensatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrads. Dies hat zur Folge, dass bei feststehendem Steg das Hohlrad und das Sonnenrad in die gleiche Drehrichtung rotieren.

Im Zugbetrieb des Getriebes sind die Planetensätze des Getriebes in der Reihenfolge erster Planetensatz, zweiter Planetensatz und dritter Planetensatz angeordnet. Das erste, zweite, dritte, vierte und sechste Schaltelement können als Bremse ausgeführt sein. Das fünfte und siebte Schaltelement können als Kupplung ausgeführt sein.

Bei einer ganz besonderen Ausführung kann das Getriebe eine elektrische Maschine aufweisen, die mit der Getriebeausgangswelle wirkverbunden oder wirkverbindbar ist. Die elektrische Maschine kann dem ersten und/oder dem zweiten und/oder dem dritten Planetensatz triebtechnisch nachgeschaltet sein. Dies bietet den Vorteil, dass das durch die elektrische Maschine bereitgestellte Drehmoment nicht auf die Planetensätze wirkt. Die elektrische Maschine weist zudem den Vorteil auf, dass sie den Fahrradfahrer im Fahrbetrieb unterstützen kann. Dadurch ist eine feine Gangabstufung nicht notwendig, da aufgrund der elektrischen Maschine die Muskelkraft eine geringe Bedeutung für den Antrieb hat.

Die elektrische Maschine besteht zumindest aus einem drehfesten Stator und einem drehbar gelagerten Rotor und ist in einem motorischen Betrieb dazu eingerichtet, elektrische Energie in mechanische Energie in Form von Drehzahl und Drehmoment zu wandeln, sowie in einem generatorischen Betrieb mechanische Energie in elektrische Energie in Form von Strom und Spannung zu wandeln.

Die elektrische Maschine kann, insbesondere in radialer Richtung, versetzt zu einer Mittelachse des Getriebes und/oder der Tretlagerkurbelwelle angeordnet sein. Insbesondere kann eine Mittelachse der elektrischen Maschine parallel zu einer Mittelachse des Getriebes verlaufen. Dies bietet den Vorteil, dass die elektrische Maschine in einem Bereich des Tretlagers angeordnet sein kann, bei dem ausreichend Platz zur Aufnahme der elektrischen Maschine zur Verfügung steht. Darüber hinaus kann ein Innendurchmesser der elektrischen Maschine frei gewählt werden, da die nicht zum Getriebe gehörende Tretlagerkurbelwelle nicht durch die elektrische Maschine hindurch verläuft.

Die elektrische Maschine kann mittels eines Stirnradgetriebes und/oder eines Riementriebs und/oder eines Überlagerungsgetriebes mit der Getriebeausgangswelle wirkverbunden oder mittels eines achten Schaltelements wirkverbindbar sein. Dabei kann das achte Schaltelement ein Freilauf sein. Damit ist sichergestellt, dass bei einem Fahrbetrieb ohne die elektrische Maschine keine Verluste durch den mitdrehenden Motor der elektrischen Maschine verursacht werden.

Das Getriebe kann modular ausgeführt sein. Dies bedeutet, dass die elektrische Maschine und die Planetensätze als eine Funktionseinheit in das Tretlagergehäuse integriert sind und/oder als eine Funktionseinheit in das Tretlagergehäuse eingebracht oder aus diesem ausgebaut werden können.

Von besonderem Vorteil ist ein Tretlager mit dem Getriebe. Dabei kann die Getriebeeingangswelle mit der Tretlagerkurbelwelle drehfest verbunden sein. Insbesondere kann das Tretlager ein Tretlagergehäuse aufweisen, wobei das Getriebe innerhalb des Tretlagergehäuses, insbesondere in einem Hohlraum des Tretlagergehäuses, angeordnet sein kann. Von ganz besonderem Vorteil ist ein Fahrrad mit dem Getriebe oder dem Tretlager.

In den Figuren ist der Erfindungsgegenstand schematisch dargestellt und wird anhand der Figuren nachfolgend beschrieben, wobei gleiche oder gleichwirkende Elemente zumeist mit denselben Bezugszeichen versehen sind. Dabei zeigt:
- Fig. 1: eine schematische Darstellung des erfindungsgemäßen Getriebes gemäß einem ersten Ausführungsbeispiel,
- Fig. 2: eine Tabelle mit Werten für die Standübersetzung,
- Fig. 3: eine Schaltmatrix für das in Fig. 2 dargestellte Getriebe.
- Fig. 4: eine schematische Darstellung des erfindungsgemäßen Getriebes gemäß einem zweiten Ausführungsbeispiel,

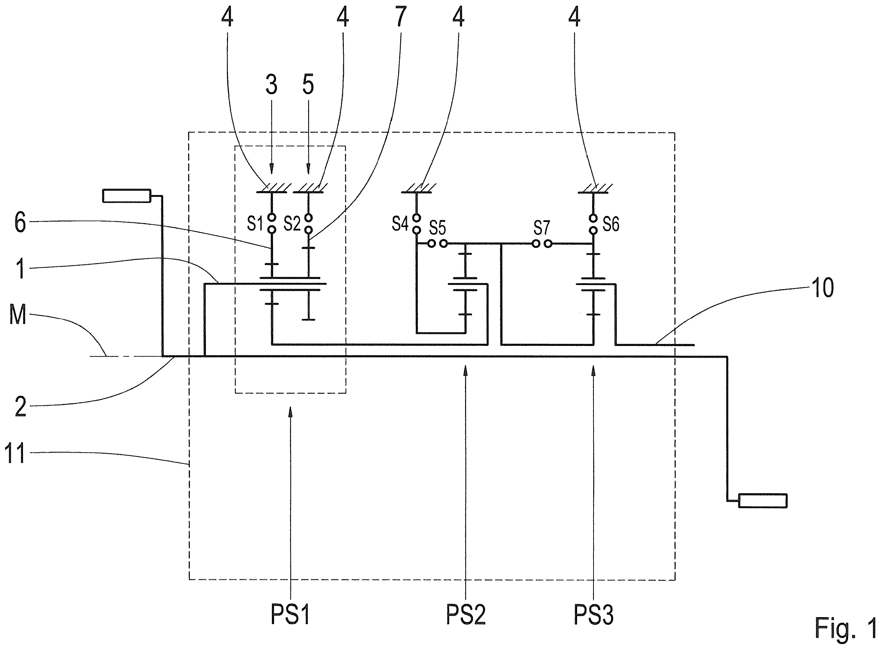

Das in Fig. 1 dargestellte Getriebe ist rotationssymmetrisch zu einer Mittelachse M des Getriebes ausgeführt, wobei nur die obere Hälfte des Getriebes dargestellt ist. Das Getriebe weist eine Getriebeeingangswelle 1 auf, die mit einer Tretlagerkurbelwelle 2 drehfest verbunden ist. Die Tretlagerkurbelwelle 2 weist an ihren Enden jeweils ein Pedal auf. Darüber hinaus weist das Getriebe einen ersten Planetensatz PS1, einen zweiten Planetensatz PS2 und einen dritten Planetensatz PS3 auf, die miteinander wirkverbunden sind. Dabei ist ein Steg des ersten Planetensatzes PS1 mit der Getriebeeingangswelle drehfest verbunden. Der erste Planetensatz PS1 weist einen Planeten mit einer ersten Planetenstufe 3 und einer zweiten Planetenstufe 5 auf.

Ein erstes Hohlrad 6 ist mit der ersten Planetenstufe 3 in Eingriff und ist mittels eines ersten Schaltelements S1 mit einem Getriebegehäuse 4 drehfest verbindbar. Ein zweites Hohlrad 7 ist mit der zweiten Planetenstufe 5 in Eingriff und ist mittels eines zweiten Schaltelements S2 mit dem Getriebegehäuse 4 drehfest verbindbar.

Ein Sonnenrad des ersten Planetensatzes PS1, das in Eingriff mit der ersten Planetenstufe PS1 ist, ist mit einem Steg des zweiten Planetensatzes PS2 drehfest verbunden. Ein Sonnenrad des zweiten Planetensatzes PS2 ist mittels eines vierten Schaltelements S4 mit dem Getriebegehäuse 4 drehfest verbindbar. Zudem ist das Sonnenrad des zweiten Planetensatzes PS2 mittels eines fünften Schaltelements S5 mit einem Hohlrad des zweiten Planetensatzes PS2 drehfest verbindbar. Das Hohlrad des zweiten Planetensatzes PS2 ist darüber hinaus mit einem Sonnenrad des dritten Planetensatzes PS3 drehfest verbunden.

Ein Hohlrad des dritten Planetensatzes PS3 ist mittels eines sechsten Schaltelements S6 mit dem Getriebegehäuse 4 drehfest verbindbar. Zudem ist das Hohlrad des dritten Planetensatzes PS3 mittels eines siebten Schaltelements S7 mit dem Sonnenrad des dritten Planetensatzes PS3 drehfest verbindbar. Ein Steg des dritten Planetensatzes PS3 ist mit einer Getriebeausgangswelle 10 drehfest verbunden.

Die Planetensätze sind koaxial zur Mittelachse M des Getriebes und/oder Tretlagerkurbelwelle 2 angeordnet. Darüber hinaus ist die Getriebeausgangswelle 10 koaxial zu der Mittelachse M des Getriebes und/oder der Tretlagerkurbelwelle 2 angeordnet. Das Getriebe ist in einem Hohlraum eines Tretlagergehäuses 11 eines Tretlagers eines nicht dargestellten Fahrrads angeordnet.

Die Getriebeausgangswelle 10 ist mit einem in den Figuren nicht dargestellten Zugmittelträger drehfest verbunden. Der Zugmittelträger kann beispielsweise ein Kettenrad oder ein Riemenrad sein und dient zum Übertragen des von dem Getriebe abgegebenen Drehmoments auf ein nicht dargestelltes Hinterrad.

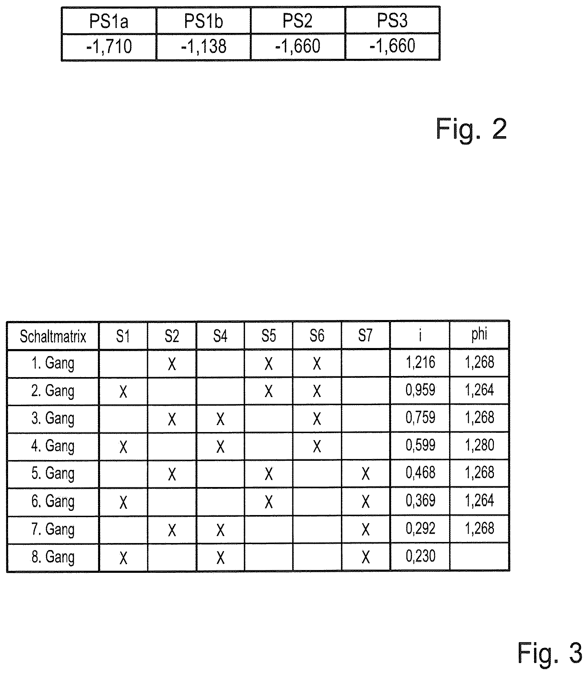

Fig. 2 zeigt die Werte für die Standübersetzung. Dabei bezeichnet PS1a die Standübersetzung für den ersten Planetensatz PS1 bezogen auf die erste Planetenstufe 3 und PS1b die Standübersetzung für den ersten Planetensatz PS1 bezogen auf die zweite Planetenstufe 5. Wie aus der Tabelle ersichtlich ist, weisen der zweite und dritte Planetensatz PS2, PS3 dieselbe Standübersetzung auf.

Fig. 3 zeigt die Schaltmatrix des in Fig. 1 dargestellten Getriebes. Darüber hinaus ist aus der Tabelle die Übersetzung "i" für die einzelnen Gänge zwischen der Getriebeeingangswelle 1 und der Getriebeausgangswelle 10 zu entnehmen. Außerdem sind aus der Tabelle die Gangsprünge "phi" zu entnehmen. Der Buchstabe "x" kennzeichnet, dass die jeweiligen Schaltelemente geschlossen sind. Aus Fig. 3 ist ersichtlich, dass das Getriebe acht Gänge aufweist.

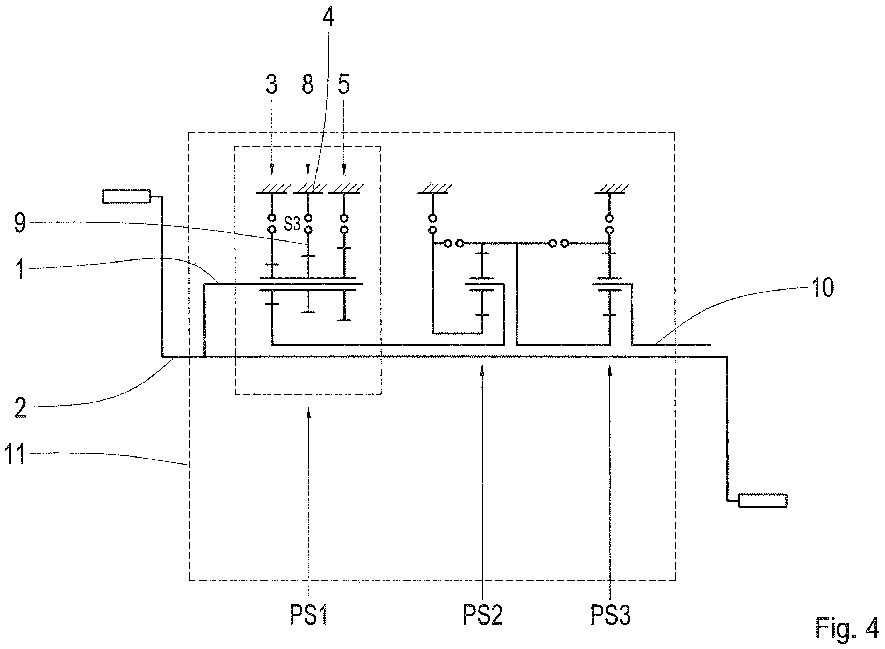

Das in Fig. 4 dargestellte Getriebe unterscheidet sich von dem in Fig. 1 dargestellten Getriebe darin, dass der Planet des ersten Planetensatzes PS1 eine dritte Planetenstufe 8 aufweist. Ein drittes Hohlrad 9 steht mit der dritten Planetenstufe 8 in Eingriff und kann mittels eines dritten Schaltelements S3 mit dem Getriebegehäuse 4 drehfest verbindbar sein. Der Durchmesser der dritten Planetenstufe 8 ist größer als der Durchmesser der ersten Planetenstufe 3 und kleiner als der Durchmesser der zweiten Planetenstufe 5.

### Bezugszeichen

- 1: Getriebeeingangswelle
- 2: Tretlagerkurbelwelle
- 3: erste Planetenstufe
- 4: Getriebegehäuse
- 5: zweite Planetenstufe
- 6: erstes Hohlrad
- 7: zweites Hohlrad
- 8: dritte Planetenstufe
- 9: drittes Hohlrad
- 10: Getriebeausgangswelle
- 11: Tretlagergehäuse

- M: Mittelachse
- S1: erstes Schaltelement
- S2: zweites Schaltelement
- S3: drittes Schaltelement
- S4: viertes Schaltelement
- S5: fünftes Schaltelement
- S6: sechstes Schaltelement
- S7: siebtes Schaltelement
- PS1: erster Planetensatz
- PS2: zweiter Planetensatz
- PS3: dritter Planetensatz

## Patentansprüche

1. Getriebe für ein Fahrrad, mit einer Getriebeeingangswelle (1), die mit einer Tretlagerkurbelwelle (2) drehfest verbindbar ist, einem ersten Planetensatz (PS1), einem zweiten Planetensatz (PS2) und einem dritten Planetensatz (PS3), die miteinander wirkverbunden sind, wobei ein Element des ersten Planetensatzes (PS1) mit der Getriebeeingangswelle (1) drehfest verbunden ist und der erste Planetensatz einen Planeten mit einer ersten Planetenstufe (3) und einer zweiten Planetenstufe (5) aufweist, **dadurch gekennzeichnet, dass** ein mit einem Verzahnungsbereich der ersten Planetenstufe (3) in Eingriff stehendes erstes Hohlrad (6) mittels eines ersten Schaltelements (S1) mit einem Getriebegehäuse (4) drehfest verbindbar ist und ein mit einem Verzahnungsbereich der zweiten Planetenstufe (5) in Eingriff stehendes zweites Hohlrad (7) mittels eines zweiten Schaltelements (S2) mit dem Getriebegehäuse (4) drehfest verbindbar ist.

2. Getriebe nach Anspruch 1, **dadurch gekennzeichnet, dass**
a. der Planet des ersten Planetensatzes (PS1) eine dritte Planetenstufe (8) aufweist oder dass
b. der Planet des ersten Planetensatzes (PS1) eine dritte Planetenstufe (8) aufweist und ein mit einem Verzahnungsbereich der dritten Planetenstufe (8) in Eingriff stehendes drittes Hohlrad (9) mittels eines dritten Schaltelements (S3) mit dem Getriebegehäuse (4) drehfest verbindbar ist.

3. Getriebe nach Anspruch 1 oder 2, **dadurch gekennzeichnet, dass** das Element des ersten Planetensatzes (PS1) ein Steg ist.

4. Getriebe nach einem der Ansprüche 1 bis 3, **dadurch gekennzeichnet, dass**
a. ein Sonnenrad des ersten Planetensatzes (PS1) mit einem Steg des zweiten Planetensatzes (PS2) drehfest verbunden ist und/oder dass
b. ein mit der ersten Planetenstufe (3) in Eingriff stehendes Sonnenrad mit einem Steg des zweiten Planetensatzes (PS2) drehfest verbunden ist.

5. Getriebe nach einem der Ansprüche 1 bis 4, **dadurch gekennzeichnet, dass** ein Sonnenrad des zweiten Planetensatzes (PS2) mittels eines vierten Schaltelements (S4) mit dem Getriebegehäuse (4) drehfest verbindbar ist.

6. Getriebe nach einem der Ansprüche 1 bis 5, **dadurch gekennzeichnet, dass** zwei Elemente des zweiten Planetensatzes (PS2) mittels eines fünften Schaltelements (S5) drehfest miteinander verbindbar ist.

7. Getriebe nach einem der Ansprüche 1 bis 6, **dadurch gekennzeichnet, dass** ein Hohlrad des zweiten Planetensatzes (PS2) mit einem Sonnenrad des dritten Planetensatzes (PS3) drehfest verbunden ist.

8. Getriebe nach einem der Ansprüche 1 bis 7, **dadurch gekennzeichnet, dass** ein Hohlrad des dritten Planetensatzes (PS3) mittels eines sechsten Schaltelements (S6) mit dem Getriebegehäuse (4) drehfest verbindbar ist.

9. Getriebe nach einem der Ansprüche 1 bis 8, **dadurch gekennzeichnet, dass** zwei Elemente des dritten Planetensatzes (PS3) mittels eines siebten Schaltelements (S7) drehfest miteinander verbindbar sind.

10. Getriebe nach einem der Ansprüche 1 bis 9, **dadurch gekennzeichnet, dass** ein Element, insbesondere ein Steg, des dritten Planetensatz (PS3) mit einer Getriebeausgangswelle (10) drehfest verbunden ist.

11. Getriebe nach Anspruch 10, **dadurch gekennzeichnet, dass** eine elektrische Maschine mit der Getriebeausgangswelle (10) wirkverbunden oder wirkverbindbar ist.

12. Getriebe nach Anspruch 11, **dadurch gekennzeichnet, dass** die elektrische Maschine mittels eines Stirnradgetriebes und/oder eines Riementriebs und/oder eines Überlagerungsgetriebes mit der Getriebeausgangswelle wirkverbunden oder mittels eines achten Schaltelements wirkverbindbar ist.

13. Tretlager mit einer Tretlagerkurbelwelle und einem Getriebe nach einem der Ansprüche 1 bis 12, **dadurch gekennzeichnet, dass** die Getriebeeingangswelle (1) mit der Tretlagerkurbelwelle (2) drehfest verbunden ist.

14. Tretlager nach Anspruch 13, **gekennzeichnet durch** ein Tretlagergehäuse (11), wobei das Getriebe innerhalb eines Hohlraums des Tretlagergehäuses (11) angeordnet ist.

15. Fahrrad mit einem Getriebe nach einem der Ansprüche 1 bis 12 oder einem Tretlager nach Anspruch 13 oder 14.

## Claims

1. Transmission for a bicycle, having a transmission input shaft (1) which is connectable in a rotationally fixed manner to a bottom bracket bearing crankshaft (2), a first planetary set (PS1), a second planetary set (PS2), and a third planetary set (PS3), said planetary sets (PS1, PS2, PS3) being operatively connected to one another, wherein one element of the first planetary set (PS1) is connected in a rotationally fixed manner to the transmission input shaft (1), and the first planetary set has a planet having a first planetary stage (3) and a second planetary stage (5), **characterized in that** a first ring gear (6) which engages with a toothed region of the first planetary stage (3) by means of a first shifting element (S1) is connectable in a rotationally fixed manner to a transmission housing (4), and a second ring gear (7) which engages with a toothed region of the second planetary stage (5) by means of a second shifting element (S2) is connectable in a rotationally fixed manner to the transmission housing (4).

2. Transmission according to Claim 1, **characterized in that**
a. the planet of the first planetary set (PS1) has a third planetary stage (8), or **in that**
b. the planet of the first planetary set (PS1) has a third planetary stage (8), and a third ring gear (9) which engages with a toothed region of the third planetary stage (8) by means of a third shifting element (S3) is connectable in a rotationally fixed manner to the transmission housing (4).

3. Transmission according to Claim 1 or 2, **characterized in that** the element of the first planetary set (PS1) is a web.

4. Transmission according to one of Claims 1 to 3, **characterized in that**
a. a sun gear of the first planetary set (PS1) is connected in a rotationally fixed manner to a web of the second planetary set (PS2), and/or **in that**
b. a sun gear which engages with the first planetary stage (3) is connected in a rotationally fixed manner to a web of the second planetary set (PS2) .

5. Transmission according to one of Claims 1 to 4, **characterized in that** a sun gear of the second planetary set (PS2) by means of a fourth shifting element (S4) is connectable in a rotationally fixed manner to the transmission housing (4).

6. Transmission according to one of Claims 1 to 5, **characterized in that** two elements of the second planetary set (PS2) by means of a fifth shifting element (S5) are connectable in a rotationally fixed manner to one another.

7. Transmission according to one of Claims 1 to 6, **characterized in that** a ring gear of the second planetary set (PS2) is connected in a rotationally fixed manner to a sun gear of the third planetary set (PS3).

8. Transmission according to one of Claims 1 to 7, **characterized in that** a ring gear of the third planetary set (PS3) by means of a sixth shifting element (S6) is connectable in a rotationally fixed manner to the transmission housing (4).

9. Transmission according to one of Claims 1 to 8, **characterized in that** two elements of the third planetary set (PS3) by means of a seventh shifting element (S7) are connectable in a rotationally fixed manner to one another.

10. Transmission according to one of Claims 1 to 9, **characterized in that** an element, in particular a web, of the third planetary set (PS3) is connected in a rotationally fixed manner to a transmission output shaft (10).

11. Transmission according to Claim 10, **characterized in that** an electric machine is operatively connected, or operatively connectable, to the transmission output shaft (10).

12. Transmission according to Claim 11, **characterized in that** the electric machine by means of a spur gear unit and/or a belt drive and/or an overriding transmission is operatively connected to the transmission output shaft, or is operatively connectable by means of an eighth shifting element.

13. Bottom bracket bearing having a bottom bracket bearing crankshaft and a transmission according to one of Claims 1 to 12, **characterized in that** the transmission input shaft (1) is connected in a rotationally fixed manner to the bottom bracket bearing crankshaft (2).

14. Bottom bracket bearing according to Claim 13, **characterized by** a bottom bracket bearing housing (11), wherein the transmission is disposed within a cavity of the bottom bracket bearing housing (11).

15. Bicycle having a transmission according to one of Claims 1 to 12, or a bottom bracket bearing according to Claim 13 or 14.

## Revendications

1. Boîte de vitesses pour une bicyclette, comprenant un arbre d'entrée de boîte de vitesses (1) qui peut être connecté de manière solidaire en rotation avec une manivelle de pédalier (2), un premier train planétaire (PS1), un deuxième train planétaire (PS2) et un troisième train planétaire (PS3), qui sont en liaison fonctionnelle les uns avec les autres, un élément du premier train planétaire (PS1) étant connecté de manière solidaire en rotation à l'arbre d'entrée de boîte de vitesses (1) et le premier train planétaire présentant un satellite avec un premier étage de satellite (3) et un deuxième étage de satellite (5), **caractérisée en ce qu'**une première couronne dentée (6) en prise avec une région dentée du premier étage de satellite (3) peut être connectée de manière solidaire en rotation à un boîtier de boîte de vitesses (4) au moyen d'un premier élément de commutation (S1) et une deuxième couronne dentée (7) en prise avec une région dentée du deuxième étage de satellite (5) peut être connectée de manière solidaire en rotation au boîtier de boîte de vitesses (4) au moyen d'un deuxième élément de commutation (S2).

2. Boîte de vitesses selon la revendication 1, **caractérisée en ce que**
a. le satellite du premier train planétaire (PS1) présente un troisième étage de satellite (8) ou **en ce que**
b. le satellite du premier train planétaire (PS1) présente un troisième étage de satellite (8) et une troisième couronne dentée (9) en prise avec une région dentée du troisième étage de satellite (8) peut être connectée de manière solidaire en rotation au boîtier de boîte de vitesses (4) au moyen d'un troisième élément de commutation (S3).

3. Boîte de vitesses selon la revendication 1 ou 2, **caractérisée en ce que** l'élément du premier train planétaire (PS1) est un porte-satellites.

4. Boîte de vitesses selon l'une quelconque des revendications 1 à 3, **caractérisée en ce que**
a. une roue solaire du premier train planétaire (PS1) est connectée de manière solidaire en rotation à un porte-satellites du deuxième train planétaire (PS2) et/ou **en ce que**
b. une roue solaire en prise avec le premier étage de satellite (3) est connectée de manière solidaire en rotation à un porte-satellites du deuxième train planétaire (PS2).

5. Boîte de vitesses selon l'une quelconque des revendications 1 à 4, **caractérisée en ce qu'**une roue solaire du deuxième train planétaire (PS2) peut être connectée de manière solidaire en rotation au boîtier de boîte de vitesses (4) au moyen d'un quatrième élément de commutation (S4).

6. Boîte de vitesses selon l'une quelconque des revendications 1 à 5, **caractérisée en ce que** deux éléments du deuxième train planétaire (PS2) peuvent être connectés l'un à l'autre de manière solidaire en rotation au moyen d'un cinquième élément de commutation (S5).

7. Boîte de vitesses selon l'une quelconque des revendications 1 à 6, **caractérisée en ce qu'**une couronne dentée du deuxième train planétaire (PS2) est connectée de manière solidaire en rotation à une roue solaire du troisième train planétaire (PS3) .

8. Boîte de vitesses selon l'une quelconque des revendications 1 à 7, **caractérisée en ce qu'**une couronne dentée du troisième train planétaire (PS3) peut être connectée de manière solidaire en rotation au boîtier de boîte de vitesses (4) au moyen d'un sixième élément de commutation (S6).

9. Boîte de vitesses selon l'une quelconque des revendications 1 à 8, **caractérisée en ce que** deux éléments du troisième train planétaire (PS3) peuvent être connectés l'un à l'autre de manière solidaire en rotation au moyen d'un septième élément de commutation (S7).

10. Boîte de vitesses selon l'une quelconque des revendications 1 à 9, **caractérisée en ce qu'**un élément, en particulier un porte-satellites, du troisième train planétaire (PS3) est connecté de manière solidaire en rotation à un arbre de sortie de boîte de vitesses (10).

11. Boîte de vitesses selon la revendication 10, **caractérisée en ce qu'**une machine électrique est ou peut être connectée fonctionnellement à l'arbre de sortie de boîte de vitesses (10).

12. Boîte de vitesses selon la revendication 11, **caractérisée en ce que** la machine électrique est connectée fonctionnellement, au moyen d'un engrenage à pignons droits et/ou d'un entraînement à courroie et/ou d'une transmission à superposition ou peut être connectée fonctionnellement au moyen d'un huitième élément de commutation, à l'arbre de sortie de boîte de vitesses.

13. Pédalier comprenant une manivelle de pédalier et une boîte de vitesses selon l'une quelconque des revendications 1 à 12, **caractérisé en ce que** l'arbre d'entrée de boîte de vitesses (1) est connecté de manière solidaire en rotation à la manivelle de pédalier (2).

14. Pédalier selon la revendication 13, **caractérisé par** un boîtier de pédalier (11), la boîte de vitesses étant disposée à l'intérieur d'une cavité du boîtier de pédalier (11).

15. Bicyclette comprenant une boîte de vitesses selon l'une quelconque des revendications 1 à 12 ou un pédalier selon la revendication 13 ou 14.
